## Europäisches Patentamt

(19) **European Patent Office**

**Office européen des brevets**

(11) Veröffentlichungsnummer: **0 059 745**
**B1**

(12) # EUROPÄISCHE PATENTSCHRIFT

(45) Veröffentlichungstag der Patentschrift:
04.12.85

(51) Int. Cl.⁴: **G 01 N 29/00**

(21) Anmeldenummer: **81902643.6**

(22) Anmeldetag: **05.09.81**

(86) Internationale Anmeldenummer:
**PCT/DE 81/00137**

(87) Internationale Veröffentlichungsnummer:
**WO 82/00893 (18.03.82 Gazette 82/8)**

(54) **VERFAHREN UND VORRICHTUNG ZUR SCHALLEMISSIONS-ORTUNG UND -ANALYSE.**

(30) Priorität: **10.09.80 DE 3033990**
**10.09.80 DE 8024132 U**

(43) Veröffentlichungstag der Anmeldung:
**15.09.82 Patentblatt 82/37**

(45) Bekanntmachung des Hinweises auf die Patenterteilung:
**04.12.85 Patentblatt 85/49**

(84) Benannte Vertragsstaaten:
**AT CH FR GB LI LU NL SE**

(56) Entgegenhaltungen:
**DE - C - 1 516 601**
**FR - A - 2 262 303**
**FR - A - 2 304 088**

**THE SOVIET JOURNAL OF NONDESTRUCTIVE
TESTING, vol. 16, nr. 8, August 1980, New York (US), V.I.
VOLOSHINA e a.: "Acoustic instrument for determining
the position of a developing flow", pages 607-610**

(73) Patentinhaber: **GEWERTEC GESELLSCHAFT FÜR
WERKSTOFFTECHNIK MBH, Westermannstrasse 44,
D-4600 Dortmund (DE)**

(72) Erfinder: **CROSTACK, Horst-Artur, Beringweg 2,
D-5860 Iserlohn (DE)**

(74) Vertreter: **Künneth, Hildegard, Patentanwältin
Dipl.-Phys. H.G. Künneth Adickesstrasse 9 (Hochhaus),
D-3000 Hannover 1 (DE)**

BUNDESDRUCKEREI BERLIN

## Beschreibung

Die Erfindung betrifft ein Verfahren zur Ortung und Analyse von Schallemissionen für die Prüfung von Einrichtungen und Bauteilen auf Schadenstellen, bei dem aus den Eintreffzeitpunkten von Schallimpulsen an mehreren, im Abstand voneinander auf dem zu prüfenden Objekt angeordneten Meßstellen und den Meßstellen-Koordinaten die Lage der Schallemissionsquelle ermittelt wird. Ferner betrifft die Erfindung eine Vorrichtung zur Ausübung dieses Verfahrens mit mehreren im Abstand voneinander auf der Prüflingsoberfläche anzubringenden Ultraschall-Meßköpfen, deren Wandlersignale Schaltungseinheiten zugeleitet werden, in denen die Laufzeitdifferenzen zwischen den von den Wandlern empfangenen Schallimpulsen ermittelt und die daraus abgeleiteten Meßwerte mit den jeweiligen Koordinaten der Ultraschallköpfe korreliert werden zwecks Bestimmung der Lage der Schallemissionsquelle.

Die der Erfindung zugrunde liegende Problemstellung wird nachstehend unter Bezugnahme auf das Hauptanwendungsgebiet der Erfindung erläutert. Jedoch ist die Erfindung nicht nur auf diesem Gebiet anwendbar, sondern auch auf jedem anderen Gebiet, auf dem aus dem Ankommen eines Schallimpulses eine Ortung der Quelle der Schallemissionen erfolgen soll.

Beim Betrieb von Maschinen und Anlagen können Geräusche auftreten, die im Inneren der Werkstoffe entstehen und mit einem beginnenden Versagen in Zusammenhang stehen. So senden z. B. entstehende Risse im Mikrobereich derartige Schallwellen aus, z. T. zu Zeitpunkten weit vor dem Versagen. Diese Schallwellen werden für eine Schadensfrüherkennung ausgenutzt, wodurch der Schädigungsgrad und der Fortgang des Versagens erfaßt werden. Neben der Analyse der Vorgänge — Definition der Art der Schallquellen — ist insbesondere die Lokalisierung der Schallquelle für Abhilfemaßnahmen von großer Bedeutung.

Die Ortung der Schallquellen erfolgt bekanntermaßen in der Weise, daß die Laufzeitdifferenzen gemessen werden, die auf dem Weg des Schalles von der Schallquelle zu verschiedenen, einzeln und in größeren Abständen voneinander um die Quelle herum angeordneten Schall-Meßköpfen auftreten und daß aus diesen Laufzeitdifferenzen anhand der Lage-Koordinaten der Schall-Meßköpfe die Lage der Schallquelle errechnet wird. In Anwendung dieses Verfahrens werden auf bereits vorhandene oder entstehende Schadensstellen an der Oberfläche des Prüflings mehrere Schall-Meßköpfe in Abständen von 1 bis 5 m befestigt. Trifft ein Schallimpuls die Meßköpfe, so setzen die von diesen abgegebenen Signale eine Laufzeitmessung in Gang. Die Laufzeiten der nächsten benachbarten Meßköpfe werden verglichen und aus den Laufzeitdifferenzen wird der Ort der Schallquelle ermittelt. (H. Bretfeld, A. Möller und H.-A. Crostack: Anwendung der Schallemissionsanalyse bei der Belastung eines Druckbehälters mit pulsierendem Innendruck; Materialprüfung 19 (1977) 11, S. 467/70).

In der französischen Patentschrift 2 304 088 sowie in »The Sowjet Journal of nondestructive Testing«, Band 16, Nr. 8, August 1980, V. J. Voloshina et al.: »ACOUSTIC INSTRUMENT FOR DETERMINING THE POSITION OF A DEVELOPING FLAW«, S. 607—610, werden Vorrichtungen bzw. Anordnungen beschrieben, bei denen das gesamte Überwachungsgebiet in bestimmte, aneinander angrenzende Abschnitte unterteilt und jedem dieser Abschnitte eine bestimmte Anzahl von Schall-Meßköpfen zugeordnet ist, deren Signale Auswerteeinheiten zugeleitet werden. Aus der deutschen Patentschrift 1 516 601 ist ein Verfahren und eine Einrichtung zur Ortung schallabstrahlender Objekte bekannt geworden, wobei mehrere Körperschallempfänger zur Erzielung einer Richtcharakteristik in Gruppen zusammengefaßt werden, die die aufgenommenen Schallsignale über mechanisch-elektrische Wandler in elektrische Signale umformen und einer Auswerteinheit zuführen, in der die elektrischen Signale der räumlich voneinander getrennten Empfängergruppen miteinander korreliert werden und aus den gebildeten Korrelationsfunktionen die Laufzeitdifferenz und damit die Richtung eines wahrgenommenen Objekts ermittelt wird.

Bei den bekannten Verfahren und Vorrichtungen sind die Schallempfänger-Meßköpfe, aus deren Signalen die Laufzeit bestimmt wird, in unterschiedlichen Schallfeldern angeordnet, d. h. in Bereichen der von der Quelle ausgehenden Schallwellen, in denen die Ausbreitungsgeschwindigkeit und die Wellenart infolge der unterschiedlichen Wegstrecken, die die Schallwellen von der Quelle bis zu den Empfänger-Meßköpfen zurückgelegt haben, unterschiedlich sind. Bei der Messung der Laufzeit wird also von unähnlichen Impulsen ausgegangen, da bei den bekannten Anordnungen die Schallsignale für die Bestimmung der Laufzeitdifferenz mittels Wandlern aufgenommen werden, deren Abstand größer ist als der Durchmesser des Schallfeldes, d. h. des Feldbereichs mit ähnlichen Schallsignalen, am jeweiligen Wandlerort.

Damit diese bekannte Ortung zu richtigen Ergebnissen führt, müssen folgende wesentliche Voraussetzungen erfüllt sein:

1.  Die Geschwindigkeit, welche die Schallwelle auf ihrem Weg von der Schallquelle zum Empfänger entwickelt, muß bekannt sein, da sich anderenfalls aus den Laufzeitwerten nicht der von der Schallwelle zurückgelegte Weg und damit die Entfernung der Schallquelle vom Empfänger berechnen läßt.
2.  Die Schallimpulse dürfen nicht in dichter zeitlicher Folge auftreten, sondern müssen deutliche Abstände aufweisen. Wenn ein erneuter Impuls an anderen Stellen auftritt, bevor die Welle des ersten Impulses alle zur Ortung benötigten Empfänger erreicht hat, ergibt sich eine Fehlortung (H.-D. Steffens und H.-A. Crostack: Einflußgrößen bei der Analyse von Schallemissionen; Zeitschrift für Werkstofftechnik (1973) 8, S. 442/7).

3. Die Schallimpulse müssen sich sehr ähnlich sein, da eine Veränderung der Wellenart oder der Impulsform (z. B. der Amplitude oder der Anstiegszeit) die elektronischen Registriergeräte (Trigger) zu unterschiedlichen Zeiten ansprechen läßt (H.-D. Steffens, D. Krempel, D. Stegemann und H.-A. Crostack: Analyse von Signalen der Schallemission; Zeitschrift für Werkstofftechnik 6 (1975) 3, S. 88/94.

Damit »kritische« Quellen geortet werden und nicht die von Störgeräuschen, muß die Schallquelle identifiziert werden. Hierzu ist eine Analyse erforderlich, die sich bei dem bekannten Verfahren und den danach arbeitenden Vorrichtungen nur parallel zur Ortung — nicht gleichzeitig damit — durchführen läßt.

Bei den zu ortenden, von Schallemissionsereignissen herrührenden Schallimpulsen ist keiner der vorstehend aufgeführten Bedingungen erfüllbar, wie nachstehend unter Bezugnahme auf die vorstehend verwendeten Ziffern erläutert werden wird.

## Zu Ziffer 1

### Schallgeschwindigkeit

Beim Auftreten eines einzelnen Schallemissionsereignis, das in der Regel impulsartig auftritt, werden Longitudinal- und Transversalwellen frei, die zudem winkelabhängige Intensität (Richtcharakteristik) aufweisen. Dadurch besitzen diese Wellen je nach Ereignis unterschiedliche Intensität und sie breiten sich mit verschiedenen Geschwindigkeiten aus.

Beim Durchlaufen eines Festkörpers (Anlage, Maschine) werden diese Wellen reflektiert, gedämpft und umgewandelt. Neben der reinen Modenkonversion kann es dabei auch zur Entstehung geführter Wellen (Oberflächen-, Platten-, Rohr-, Stabwellen u. a. m.) kommen, die z. T. sehr hohe Dispersion aufweisen. Damit aber wird die Ausbreitungsgeschwindigkeit von unbekannten Werten, nämlich vom Frequenzspektrum, abhängig. Da zudem diese Umwandlung -abhängig von der Geometrie des Körpers — vom Laufweg abhängt, liegt für jede Enfernung Schallquelle — Empfänger eine andere mittlere Geschwindigkeit vor.

Bei den bekannten Ortungsverfahren und den danach arbeitenden Vorrichtungen wird die Geschwindigkeit in Abweichung von den tatsächlichen Gegebenheiten als konstant vorgegeben. Hieraus resultieren wesentliche Abweichungen des Ergebnisses von den realen Verhältnissen.

Ähnliches gilt, sofern der Schall verschiedene Medien mit abweichenden Geschwindigkeiten, wie z. B. einen wassergefüllten Behälter, durchläuft. Auch hier führt die Vorgabe einer konstanten Geschwindigkeit zu Fehlern bei der Auswertung der Meßergebnisse, die eine Anwendung des Schallemissionsverfahrens für Prüfzwecke bislang als nicht sinnvoll erscheinen lassen mußten.

## Zu Ziffer 2

### Zeitliche Abstände der Schallimpulse

Die Bedingung, daß Schallimpulse zeitlich weit genug getrennt auftreten, läßt sich nur in Einzelfällen — z. B. bei einer Druckprüfung mit kontrollierbaren Belastungsbedingungen — erfüllen. Bei zeitlich dicht aufeinander folgenden Ereignissen, wie z. B. plastische Verformung, Phasenumwandlungen im Gefüge oder Fertigungsgeräuschen, wie sie bei Schweiß- und Lötprozessen auftreten, ist eine Ortung bislang ausgeschlossen gewesen.

## Zu Ziffer 3

### Ähnlichkeit der Impulse

Diese dritte zu erfüllende Vorraussetzung ist in realen Strukturen gar nicht erfüllbar (H.-D. Steffens, D. Stegemann, D. Krappel und H.-A. Crostack: Analyse von Signalen der Schallemission; Zeitschrift für Werkstofftechnik 6 (1975) 3, S. 88/94). Die Schallquelle sendet Longitudinal- und Transversalwellen aus, deren Intensität richtungsabhängig schwankt. Durch die Ausbreitung mit der unter Ziffer 1 erwähnten Wellenumwandlung und dem Entstehen geführter Wellen verändern sich die Intensitätsverhältnisse zueinander weiterhin. Da sich zudem durch die Dämpfung die Spektren verändern und die Empfänger auf bestimmte Resonanzfrequenzen ausgelegt sind, kann es vorkommen, daß die Elektronik des einen Empfängers auf die Longitudinalwellenanteile des Impulses, die des anderen auf die transversalen Anteile (oder z. B. Oberflächenwellen) anspricht. Hierdurch entstehen große Fehler bei der Ortung, und die Zuordnung der Schallquelle ist nicht möglich.

Aus diesen Gründen stößt die Bestimmung des Ortes von Schallquellen mittels des bekannten Verfahrens bereits in einfachen Bauteilen, wie Platten oder Rohren, auf große Schwierigkeiten. Bei komplizierten Geometrien, wie sie in Maschinen und Anlagen gegeben sind, werden die Schwierigkeiten derart groß, daß eine Ortung unmöglich ist.

Der Erfindung hat die Aufgabe zugrunde gelegen, ein Verfahren und eine Vorrichtung zu schaffen, mit welchen es möglich ist, in einfacher Weise auch bei nicht bekannter Ausbreitungsgeschwindigkeit des Impulses, bei hoher zeitlicher Signalfolge, bei stark verrauschten Signalen und bei mit längerem Laufweg stark ver-

änderten Impulsen sowie komplizierten Bauteil-geometrien eine Ortung (Entstehungsbestimmung) durchzuführen, und damit das Anwendungsgebiet des Schallemissionsverfahrens bei der Prüfung auf Schadensstellen wesentlich zu erweitern.

Das Verfahren gemäß der Erfindung besteht darin,

— daß jeweils an jeder Meßstelle die Eintreffzeitpunkte der Schallimpulse in mindestens drei Meßstellen-Abschnitten erfaßt werden, deren Abstände und Durchmesser so bemessen sind, daß der Gesamtdurchmesser der Meßstelle geringer ist als derjenige des zu erwartenden Schallfeldes für hinsichtlich ihrer Form sowie Wellenart ähnliche Impulse

— und daß aus den in den einzelnen Meßstellen-Abschnitten erfaßten Eintreffzeitpunkten die Laufzeitdifferenz für die Abschnitte jeder Meßstelle ermittelt,

— aus den Laufzeitdifferenzen für jede Meßstelle die Schall-Eintreff-Richtung bestimmt

— und aus den Richtungswerten und den Lage-koordinaten der Meßstellen die Lage der Schallemissionsquelle ermittelt wird.

Überdies betrifft die Erfindung eine Vorrichtung mit mehreren im Abstand voneinander auf der Prüflingsoberfläche anzubringenden Ultraschall-Meßköpfen, deren Wandlersignale Schaltungseinheiten zugeleitet werden, in denen die Laufzeitdifferenzen zwischen den von den Wandlern empfangenen Schallimpulsen ermittelt und die daraus abgeleiteten Meßwerte mit den jeweiligen Koordinaten der Ultraschall-Meßköpfe auf der Prüflingsoberfläche korreliert werden zwecks Bestimmung der Lage der Schallemissionsquelle. Diese Vorrichtung ist dadurch gekennzeichnet,

— daß jeder Ultraschall-Meßkopf aus drei oder mehr Einzel-Wandlerelementen besteht, die derart benachbart zueinander angeordnet sind, daß der von ihnen abgedeckte Bereich einen kleineren Durchmesser hat als der des zu erwartenden Schallfeldes für hinsichtlich ihrer Form sowie Wellenart ähnliche Impulse,

— daß jedem Wandlerelement ein gesonderter Verstärker, Digitalisierer und Zähler nachgeschaltet ist,

— daß den Zählern jedes Ultraschall-Meßkopfes ein erster Rechner nachgeschaltet ist für die Übernahme der Zählerwerte des ihm zugeordneten Ultraschall-Meßkopfes und für deren Auswertung zwecks Bestimmung der Richtung, in der die Schallemissionsquelle, bezogen auf den Ultraschall-Meßkopf liegt

— und daß allen ersten Rechnern ein zweiter Rechner nachgeschaltet ist für die Korrelation der ihm eingegebenen Richtungswerte der ersten Rechner mit den Koordinaten der Ultraschall-Meßköpfe zwecks Bestimmung der Lage der Schallemissionsquelle.

Weitere Ausgestaltungen der Erfindung sind Gegenstand der Unteransprüche.

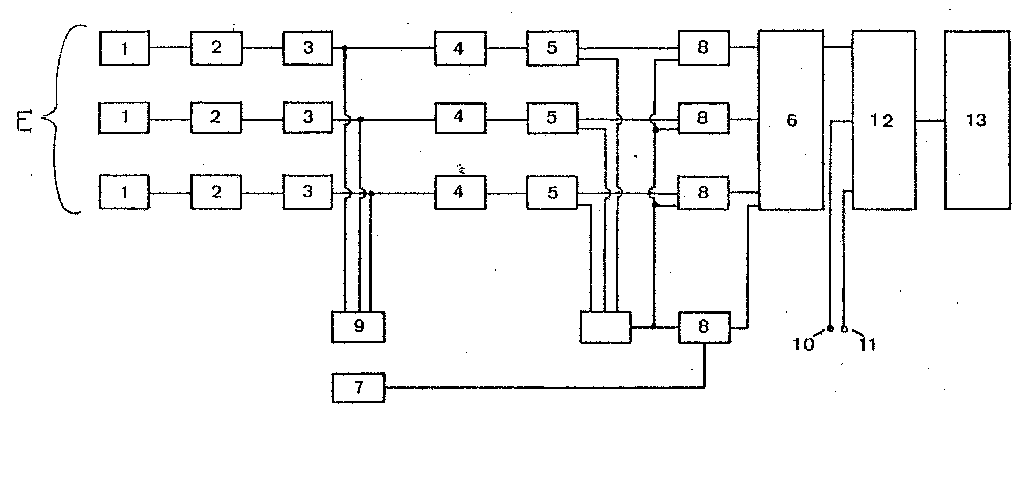

Eine beispielsweise Ausführungsform einer Vorrichtung zur Ausübung des Verfahrens gemäß der Erfindung ist nachstehend anhand des in der Zeichnung wiedergegebenen Blockschaltbildes einer solchen Vorrichtung beschrieben. Der Einfachheit halber ist nur einer der Ultraschall-Meßköpfe der Vorrichtung dargestellt und beschrieben, da die Meßköpfe im prinzipiellen Aufbau und in der Wirkungsweise übereinstimmen.

Der Ultraschall-Meßkopf E setzt sich bei der dargestellten Ausführungsform aus drei einzelnen Schallwandlerelementen (1) zusammen. Es können jedoch auch mehrere Wandlerelemente 1 zu einem Meßkopf E zusammengebaut sein, vorausgesetzt, daß deren Gesamtbreite die vorgesehene Höchstgrenze nicht überschreitet. Der Durchmesser des Meßkopfes E ist klein gegenüber der Ausdehnung des zu erwartenden Schallfeldes für hinsichtlich ihrer Form sowie Wellenart ähnliche Impulse, d. h. z. B. kleiner als 25 mm, so daß die Elemente 1 innerhalb eines Schallfeldbereiches der Quelle liegen, z. B.: bei Zick-Zack-Wellen innerhalb des 6 dB-Abfalles. Die Elemente 1 können aus beliebigen Wandler-Werkstoffen und -strukturen (piezoelektrisch, elektrodynamisch, akusto-optisch, magnetostriktiv o. ä.) bestehen.

Jedem Wandlerelement 1 ist — in der angeführten Reihenfolge — ein Verstärker und Impedanzwandler 2, ein Digitalisierer 3, ein Verzögerungsglied 4, ein Zähler 5 und eine Taktsteuerung 8 nachgeschaltet. Die Digitalisierer 3 sind ausgangsseitig überdies an einen Zählerstarter 9 angeschlossen, der zum gleichzeitigen Anschalten sämtlicher Zähler 5 dient; er wird vom ersten ankommenden digitalisierten Impuls angeschaltet, so daß durch diesen sämtliche Zähler 5 inganggesetzt werden. Die Verzögerungszeit der Verzögerungsglieder 4 ist für alle Kanäle eines Ultraschall-Meßkopfes E gleich, z. B. 20 ns. Die Zähler 5 werden von dem ersten, über den ihm zugeordneten Meßkopf-Kanal mit der vorgegebenen Verzögerung ankommenden Impuls gestoppt. Ein Zeitmesser 7 dient zum Messen der absoluten Zeit beim Start der Zähler 5. Er ist ebenso wie die Zähler 5 mit seinem Signal-Ausgang an die Eingänge eines ersten Rechners (Mikroprozessor) 6 angeschlossen, in den, gesteuert von der Taktsteuerung 8, die Meßwerte der Zähler 5 und des Zeitmessers 7 eingegeben werden. Für jeden Meßkopf E ist ein solcher gesonderter erster Rechner (Mikroprozessor) 6 vorhanden, der aus den ihm eingegebenen Laufzeitwerten die Laufzeitdifferenzen zwischen den einzelnen Elementen 1 eines Ultraschall-Meßkopfes E ermittelt und hieraus die Richtung errechnet, aus welcher der Impuls angekommen ist, sowie parallel dazu als Kenngröße für den Impuls die absolute Zeit bei Zählerstart speichert und anschließend — mit einer Verzögerung — die Zähler 5 löscht.

Alle ersten Rechner (Mikroprozessoren) 6 einer Vorrichtung sind mit ihren Ausgängen an einen zweiten Rechner 12 der Vorrichtung angeschaltet. In der Zeichnung sind mit 10 und 11 Leitungen bezeichnet, über welche die Kennwerte anderer Ultraschall-Meßköpfe E in den zweiten Rechner 12 eingegeben werden. Dem zweiten Rechner 12 ist die Ausgabeeinheit 13 nachgeschaltet. Zwischen die Impedanzwandler 2 und die Digitalisierer 3 können evtl. (nicht dargestellte) Filter oder Analysatoren geschaltet werden, welche aus einem verrauschten Signal dessen Merkmal herauslösen können.

Diese Vorrichtung arbeitet wie folgt:

Beim Auftreten eines Schallereignisses, dessen Quelle geortet werden soll, kommt der davon herrührende Schallimpuls nach unterschiedlichen Laufzeiten — entsprechend den unterschiedlichen Lagekoordinaten der Elemente 1 — in diesen Elementen an. Diese erzeugen daraus elektrische Signale, die in den Verstärkern 2 jedes Elementes 1 — eventuell mit vorausgehender oder nachfolgender Analyse bzw. Filterung — verstärkt und danach in den Digitalisierern 3 digitalisiert werden. Die aus den Wandlersignalen oder — bei Zwischenschaltung einer Analyse oder eines Filters — aus deren Analysenwerten hergeleiteten, digitalisierten Signale werden sowohl dem Zählerstarter 9 als auch der Verstärkung 4 zugeleitet. Das erste ankommende Signal bewirkt, daß der Zählerstarter 9 alle Zähler 5 des ihm zugeordneten Ultraschall-Meßkopfes E gleichzeitig startet. Dieses erste Signal erreicht den Zähler 5 über das Verzögerungsglied 4 erst nach der Verzögerungszeit und schaltet ihn ab. Die später ankommenden Signale der anderen Kanäle des Meßkopfes erreichen ihren Zähler 5 auch erst nach der Verzögerungszeit und zusätzlich noch nach der Laufzeitdifferenz gegenüber dem Kanal, in dem das erste Signal eingetroffen ist. Entsprechend später werden die anderen Zähler abgeschaltet, so daß die Differenzen der Zählerwerte der Kanäle eines Ultraschall-Meßkopfes den Laufzeitdifferenzen entsprechen. Parallel zur Zählung der Laufzeitdifferenzen ist die absolute Zeit bei Zählerstart mittels des Zeitzählers 7 gemessen worden.

Nach dem Stopp aller Zähler 5 eines Ultraschall-Meßkopfes werden deren Werte, gesteuert von der Taktsteuerung 8, dem Prozeß-Rechner 6 eingegeben, wozu als Kenngröße für den Impuls die vom Zeitmesser 7 gemessene absolute Zeit beim Start der Zähler 5 gespeichert wird. Mit einer Verzögerung nach Übernahme des Wertes für die absolute Zeit durch den Prozeß-Rechner 6 werden die Zähler 5 des dem Rechner 6 zugeordneten Ultraschall-Meßkopfes E gelöscht. Jeder Rechner 6 errechnet für den ihm zugeordneten Meßkopf E die Laufzeitdifferenzen zwischen dem Impuls- bzw. Merkmalseintreffen bei den einzelnen Wandlerelementen 1 und die daraus resultierende Richtung, aus welcher der Impuls am Meßkopf E angekommen ist.

Die Richtungswerte der Mikroprozessoren 6 aller Meßköpfe E werden dem Rechner 12 der Vorrichtung eingegeben, in den vorher bereits die Koordinaten der Meßköpfe E eingegeben worden sind, die der Rechner 12 nun in einem folgenden Rechenschritt mit den Richtungswerten in Beziehung setzt, wonach er durch Überlagerung der Richtungen den Schnittpunkt der Richtungsgeraden als Ort der Schallquelle definiert.

Bei der vorstehend erläuterten Analyse der Einzelelemente vor der Digitalisierung wird das Eintreffen eines bestimmten Merkmals des Schallimpulses gemessen. Statt dessen kann eine Analyse (z. B. Frequenzanalyse) parallel zur Richtungsbestimmung erfolgen, die direkt mit der Richtung korreliert ist.

Die Richtungen der Ultraschall-Meßköpfe können auch gespeichert und nachträglich miteinander korreliert werden, wodurch die Verarbeitung von Signalen sehr schneller Folgen möglich wird. Während bei dem bekannten Verfahren Folgen von ca. 100/sec. (abhängig vom Abstand der Meßköpfe) verarbeitet werden konnten, wird nunmehr die Verarbeitung von diesem Abstand unabhängig und kann maximale Werte von ca. 1—2 Mio/sec erreichen.

Weitere wesentliche Vorteile gegenüber dem Stand der Technik bestehen darin, daß

— die Bestimmung von der Geschwindigkeit des Impulses von der Quelle bis zum Ultraschall-Meßkopf unabhängig wird, weil die Richtung des Schallimpulses innerhalb der Einzelelemente 1 bestimmt wird;

— die Impulse innerhalb der Einzelelemente 1 (Abstand der Elemente < Schallfelddurchmesser) ähnlich bleiben, wodurch die vom jeweiligen Empfänger bevorzugt angepeilte Wellenart unwichtig und der daraus resultierende Fehler eliminiert wird;

— dadurch, daß je Ultraschall-Meßkopf die Richtung des Impulses bestimmt wird, nicht mehr abgewartet werden muß, bis der Impuls alle zur Ortung erforderlichen Meßköpfe erreicht hat. Die Werte der einzelnen Meßköpfe können gespeichert werden.

— da die Impulse innerhalb der Einzelelemente ähnlich bleiben, auf leichtem Weg in Real-Zeit eine Analyse durchgeführt werden kann, die direkt mit der ebenfalls sofort ermittelten Richtung des Impulses korreliert wird oder aus deren Merkmalen die Richtung bestimmt wird. Auf diese Weise wird eine eindeutige Kennzeichnung des Impulses möglich, ohne daß die üblichen Laufzeitdifferenzen berücksichtigt werden müßten;

— da die Richtung sofort je Ultraschall-Meßkopf bestimmt wird, selbst komplizierte Geometrien prüfbar sind. Durch die Richtungsbestimmung können Reflexionen und Modenkonversionen einfach berücksichtigt werden und verfälschen das Meßergebnis nicht.

**Patentansprüche**

1. Verfahren zur Schallemissions-Ortung und -Analyse für die Prüfung von Einrichtungen und Bauteilen auf Schadensstellen, bei dem aus den Eintreffzeitpunkten von Schallimpulsen an mehreren, im Abstand voneinander auf dem zu prüfenden Objekt angeordneten Meßstellen (E) und aus den Meßstellenkoordinaten die Lage der Schallemissionsquelle ermittelt wird, dadurch gekennzeichnet

— daß jeweils an jeder Meßstelle (E) die Eintreffzeitpunkte der Schallimpulse in mindestens drei Meßstellen-Abschnitten (1) erfaßt werden, deren Abstände und Durchmesser so bemessen sind, daß der Gesamtdurchmesser der Meßstelle (E) geringer ist als derjenige des zu erwartenden Schallfeldes für hinsichtlich ihrer Form sowie Wellenart ähnliche Impulse

— und daß aus den in den einzelnen Meßstellen-Abschnitten (1) erfaßten Eintreffzeitpunkten die Laufzeitdifferenz für die Abschnitte (1) jeder Meßstelle (E) ermittelt,

— aus den Laufzeitdifferenzen für jede Meßstelle (E) die Schall-Eintreff-Richtung bestimmt

— und aus den Richtungswerten und den Lagekoordinaten der Meßstellen (E) die Lage der Schallemissionsquelle ermittelt wird.

2. Verfahren nach Anspruch 1, dadurch gekennzeichnet, daß eine direkt mit der Richtung korrelierte Schallanalyse, z. B. eine Frequenzanalyse, an den einzelnen Meßstellen (E) durchgeführt wird.

3. Verfahren nach Anspruch 1, gekennzeichnet durch eine Analyse bzw. Filterung der Signale der einzelnen Abschnitte (1) vor deren Digitalisierung.

4. Vorrichtung zur Schallemissions-Ortung und -Analyse für die Prüfung von Einrichtungen und Bauteilen auf Schadensstellen mit mehreren im Abstand voneinander auf der Prüflingsoberfläche anzubringenden Ultraschall-Meßköpfen (E), deren Wandlersignale Schaltungseinheiten zugeleitet werden, in denen die Laufzeitdifferenzen zwischen den von den Wandlern empfangenen Schallimpulsen ermittelt und die daraus abgeleiteten Meßwerte mit den jeweiligen Koordinaten der Ultraschall-Meßköpfe (E) auf der Prüflingsoberfläche korreliert werden zwecks Bestimmung der Lage der Schallemissionsquelle, dadurch gekennzeichnet,

— daß jeder Ultraschall-Meßkopf (E) aus drei oder mehr Einzel-Wandlerelementen (1) besteht, die derart benachbart zueinander angeordnet sind, daß der von ihnen abgedeckte Bereich einen kleineren Durchmesser hat als der des zu erwartenden Schallfeldes für hinsichtlich ihrer Form sowie Wellenart ähnliche Impulse,

— daß jedem Wandlerelement (1) ein gesonderter Verstärker (2), Digitalisierer (3) und Zähler (5) nachgeschaltet ist,

— daß den Zählern (5) jedes Ultraschall-Meßkopfes (E) ein erster Rechner (6) nachgeschaltet ist für die Übernahme der Zählerwerte des ihm zugeordneten Ultraschall-Meßkopfes (E) und für deren Auswertung zwecks Bestimmung der Richtung, in der die Schallemissionsquelle, bezogen auf den Ultraschall-Meßkopf (E), liegt

— und daß allen ersten Rechnern (6) ein zweiter Rechner (12) nachgeschaltet ist für die Korrelation der ihm eingegebenen Richtungswerte der ersten Rechner (6) mit den Koordinaten der Ultraschall-Meßköpfe (E) zwecks Bestimmung der Lage der Schallemissionsquelle.

5. Vorrichtung nach Anspruch 4, gekennzeichnet durch einen mit den Digitalisierern (3) zusammengeschalteten Zählerstarter (9) zum gleichzeitigen Starten aller Zähler (5) eines Ultraschall-Meßkopfes (E) bei Ankommen des ersten Impulses.

6. Vorrichtung nach Anspruch 5, gekennzeichnet durch je ein jedem Zähler (5) vorgeschaltetes Verzögerungsglied (4) mit einer für alle Kanäle eines Ultraschall-Meßkopfes (E) gleichen Verzögerungszeit.

7. Vorrichtung nach mindestens einem der Ansprüche 4 bis 6, gekennzeichnet durch einen Zeitmesser (7) für alle Ultraschall-Meßköpfe (E) zum Messen des Zeitpunktes des Zählerstarts, dessen Werte über die Taktsteuerung (8) dem ersten Rechner (6) eingegeben werden.

8. Vorrichtung nach einem der Ansprüche 4 bis 7, dadurch gekennzeichnet, daß jedem Digitalisierer (3) ein Filter bzw. ein Analysator vorgeschaltet ist, der nur ausgewählte Impulskennwerte zum Zähler (5) durchläßt.

**Claims**

1. Method for the localization and analysis of sound emissions in the testing of an article or structural components for points of damage, wherein the location of the sound emission source is determined from the incoming sound pulse at a plurality of individual measuring receivers (E) in spaced arrangement on the surface of the article being tested and from the measuring receiver coordinates, characterized therein by

at each measuring receiver (E) detecting the arrival times of the sound pulses in at least three sound converter elements (1) with the spacing and the diameter thereof dimensioned so that the total diameter of the measuring receiver (E) is smaller than the expected sound field diameter for pulses similar with respect to form and wave type,

and determining the propagation time difference for the elements (1) of each measuring receiver (E) from the arrival times detected in the individual sound converter elements (1),
determining the sound arrival direction from the propagation time differences for each measuring receiver (E) and determining the position of the sound emission source from the direction values and the position coordinates of the measuring receivers (E).

2. Method according to claim 1, characterized by carrying out a sound analysis directly correlated to the direction, for example, a frequency analysis, at the individual measuring receivers (E).

3. Method according to claim 1, characterized by analyzing or filtering the signals of the individual elements (1) prior to digitalizing the signals.

4. A device for the localization and analysis of sound emissions in the testing of an article of apparatus or structural components for points of damage, comprising a plurality of ultrasonic measuring receivers (E) arranged in spaced relation on the surface of the article to be tested, said receivers (E) including converter elements (1) for feeding converted signals to circuit units in which the propagation time differences between the sound pulses reveived by said converters are determined and the measuring values derived therefrom are correlated to the respective coordinates of the ultrasonic measuring receivers (E) on the surface of the article to be tested for the purpose of determining the position of the sound emission source, wherein the improvement comprises that
each said ultrasonic measuring receiver (E) comprises at least three individual converter elements (1) arranged adjacent to one another so that the area covered by said converters has a smaller diameter than the expected sound field diameter for pulses similar with respect to form and wave type,
a separate amplifier (2), digitalizer (3), and counter (5) connected in series to each said converter element (1),
a first computer (6) connected in series to said counters (5) of each said ultrasonic measuring receiver (E) for the transfer of the countervalues of the associated said ultrasonic measuring receiver (E) and for the evaluation thereof for determining the direction in which the sound emission source is located with reference to the ultrasonic measuring receiver (E),
and a second computer (12) connected in series to said first computers (6) for correlating the direction values received from the first computers (6) to the coordinates of the ultrasonic measuring receivers (E) for the purpose of determining the position of the sound emission source.

5. A device according to claim 4, characterized by a counter starter for each said ultrasonic measuring receiver (E) connected to said digitalizers (3) thereof for simultaniously starting all said counters (5) of said ultrasonic measuring receiver (E) when the first pulse arrives.

6. A device according to claim 5, characterized by a delay unit (4) connected upstream of each said counter (5), and said delay unit (4) has the same time delay for all channels of said ultrasonic measuring receiver (E).

7. A device according to at least one of the preceding claims 4 to 6, characterized by a chronometer (7) for said ultrasonic measuring receiver (E) for measuring the time of the counter start, and a timing unit (8) for supplying the values of the chronometer to said first computer (6).

8. A device according to one of claims 4 to 7, characterized in that a filter or analyzer is connected upstream of each digitalizer (3), and said filter or analyzer allows only the selected pulse characterizing values to pass to said counter (5).

**Revendications**

1. Procédé de localisation et d'analyse d'émissions sonores pour la détection des emplacements défectueux dans des dispositifs et dans des éléments de constructions, dans lequel la position de la source d'où partent les émissions sonores est déterminée d'après les moments où des impulsions sonores arrivent à plusieurs emplacements de mesure (E) disposés sur l'objet à examiner, à une certaine distance les uns des autres, et d'après les coordonnées de ces emplacements de mesure, caractérisé en ce qu'à chaque emplacement de mesure (E) les moments où les impulsions sonores qui arrivent sont enregistrés dans au moins trois secteurs (1) de l'emplacement de mesure dont les distances relatives et les diamètres sont tels que le diamètre d'ensemble de l'emplacement de mesure (E) est inférieur à celui du champ sonore escompté pour des impulsions ayant des formes et des allures d'onde analogues, en ce que la différence de retard de parcours pour les différents secteurs (1) de chaque emplacement de mesure (E) est déterminée d'après les moments où des impulsions sonores arrivent dans les différents secteurs (1) des emplacements de mesure, en ce que la direction d'arrivée du son est déterminée d'après les différences de retard de parcours pour chaque emplacement de mesure (E) et en ce que la position de la source de l'émission sonore est déterminée d'après les chiffres indiquant la direction d'arrivée du son et les coordonnées indiquant la position des emplacements de mesure (E).

2. Procédé selon la revendication 1, caractérisé en ce qu'une analyse de son en corrélation directe avec la direction, par exemple une analyse de fréquence, est effectuée aux différents emplacements de mesure (E).

3. Procédé selon la revendication 1, caractérisé par une analyse ou un filtrage des signaux des différents secteurs (1) avant leur codage numérique.

4. Dispositif pour la localisation et l'analyse d'émissions sonores pour la détection d'emplacements défectueux dans des dispositifs et dans des éléments de constructions, qui comporte plusieurs têtes de mesure (E) à ultrasons qui sont disposées à une certaine distance les unes des autres à la surface de la pièce soumise à l'examen et dont les signaux transformables sont envoyés à des unités de commutation dans lesquelles les differences de retard de parcours entre les impulsions sonores reçues par les organes de transformation sont déterminées, les valeurs de mesure ainsi obtenues étant mises en corrélation avec les coordonées des têtes de mesure (E) à ultra-sons correspondantes sur la surface de la pièce soumise à l'examen, de manière à déterminer la position de la position de la source des émissions sonores, caractérisé en ce que chaque tête de mesure (E) à ultra-sons est constituée par trois ou plus de trois éléments individuels (1) de transformation qui sont placés les uns par rapport aux autres de telle manière que la zone qu'ils couvrent a un diamètre inférieur à celui du champ sonore auquel on peut s'attendre pour des impulsions ayant des formes et des allures d'onde analogues, en ce que chaque élément (1) de transformation est suivi d'un amplificateur (2), d'un organe de codage numérique (3) et d'un compteur (5), en ce que le compteur (5) de chaque tête de mesure (E) à ultra-sons est suivi d'un premier calculateur (6) qui reçoit les valeurs de comptage de la tête de mesure (E) à ultra-sons et les traite pour déterminer la direction dans laquelle se trouve, par rapport à la tête de mesure (E) à ultra-sons la source de l'émission sonore et ence que chacun des premiers calculateurs (6) est suivi d'un deuxième calculateur (12) assurant la corrélation entre les valeurs indiquant la direction du son fournie par le premier calculateur (6) et les coordonnées des têtes de mesure (E) à ultra-sons pour déterminer la position de la source de l'émission sonore.

5. Dispositif selon la revendication 4, caractérisé en ce qu'il comprend un organe (9) d'amorçage du comptage connecté avec les organes de codage numérique (3) de manière à assurer la mise en marche simultanée de tous les compteurs (5) d'une tête de mesure (E) à ultrasons à l'arrivée de la première impulsion.

6. Dispositif selon la revendication 5, caractérisé en ce qu'il comporte, en avant de chaque compteur (5), un organe de ralentissement (4), le retard à la montée étant le même pour tous les canaux d'une même tête de mesure (E) à ultrasons.

7. Dispositif selon l'une des revendications 4 à 6, caractérisé en ce qu'il comporte, pour toutes les têtes de mesure (E) à ultra-sons, un chronomètre (7) assurant la détermination des moments où les compteurs se mettent en marche, les valeurs correspondantes étant transmises au premier calculateur (6) par le dispositif (8) de commande des battements.

8. Dispositif selon l'une des revendications 4 à 7, caractérisé en ce que chaque organe de codage numérique (3) est précédé d'un filtre ou d'un analyseur qui ne laisse arriver au compteur (5) que des valeurs d'impulsion sélectionnées.